(19) Europäisches Patentamt
European Patent Office
Office européen des brevets

(11) EP 2 048 565 B1

(12) **EUROPEAN PATENT SPECIFICATION**

(45) Date of publication and mention
of the grant of the patent:
**19.06.2013 Bulletin 2013/25**

(21) Application number: **07803636.5**

(22) Date of filing: **20.07.2007**

(51) Int Cl.:
*G05D 23/19* (2006.01)     *G05B 11/36* (2006.01)
*F24H 3/00* (2006.01)     *G05B 11/42* (2006.01)
*G05B 13/02* (2006.01)

(86) International application number:
**PCT/ES2007/000449**

(87) International publication number:
**WO 2008/012387 (31.01.2008 Gazette 2008/05)**

(54) **RADIATOR HEATING SYSTEM**

HEIZSTRAHLERSYSTEM

SYSTÈME DE CHAUFFAGE À BASE DE RADIATEURS

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.07.2006 ES 200602035**

(43) Date of publication of application:
**15.04.2009 Bulletin 2009/16**

(73) Proprietors:
• **Carbonnier, Jean-Luis**
**85190 Aizenay (FR)**
• **Martinez, Thierry M.**
**17300 Blanes, Barcelona (ES)**

(72) Inventors:
• **VERDAGUER I VILLACAMPA, Jordi**
**Barcelona (ES)**

• **MARTINEZ, Thierry M.**
**Barcelona (ES)**
• **CARBONNIER, Jean-Luis**
**85190 Aizenay (FR)**

(74) Representative: **Rhein, Alain et al
Cabinet BREV&SUD
55 Avenue Clément Ader
34170 Castelnau le Lez (FR)**

(56) References cited:
**EP-A2- 0 161 891      EP-A2- 0 161 891
WO-A1-03/042607      WO-A2-03/093916
FR-A1- 2 832 212      GB-A- 2 174 798
GB-A- 2 174 798      JP-A- 2006 177 611
US-A- 5 819 845      US-A1- 2004 035 851
US-B1- 6 264 111**

**Description**

## TECHNICAL FIELD OF THE INVENTION

The invention relates to a heating system by means of radiators, which comprises at least a heat-carrying fluid heating boiler which, at least one radiator shell, wherein heat-carrying fluid enters at an inlet temperature through an inlet tube, an impulse pump of the heat-carrying fluid, and means of controlling the ambient temperature through the control of the temperature and flow of the heat-carrying fluid.

## BACKGROUND OF THE INVENTION

Patent GB730976 discloses a domestic heating radiator of the type wherein the water cools, giving off the heat to the surroundings, which increases temperature. The heating of the water produces an electrical resistance in parallel with the fluid flow, which closes a circuit on the elements of the radiator. The resistance is disposed on one side of the radiator, which can be an autonomous heating unit and independent in itself, with its own "boiler" or heater and separate from a centralized water distribution network and from a single boiler. All of this permits a versatile heating system that is easy to configure, free of the restrictions that a system based on piping entails, and with an energy efficiency that can be much better in comparison with this more conventional case in which there are circulation pipes to and from a remote boiler.

Patents GB2174798, GB2270370, GB2298265 and FR2832212 reveal heating units and radiators that have similar heaters and which improve upon the radiator of GB730976.

In the previously mentioned documents of the state of the art a fluid water flow is established, or of the heat-carrying fluid that it deals with, in closed circuit, which includes a hot water inlet in the upper part of the radiator and a cold water outlet in the lower part thereof. The heating of the water (or heat-carrying fluid) is produced outside of the radiator by means of the electric resistors, in the "heater". That forces the necessity of a double connection from the heater to the radiator, above and below and, given the different dimensions between the connections of the different manufacturers, installing this type of heaters to conventional radiators when a certain degree of autonomy is desired can be complicated and costly.

Furthermore, the control of this type of heaters is performed thermostatically, by means of all-or-nothing activation of the electrical output of the resistors, depending on whether the ambient temperature is lower or greater than the command temperature, which entails a typically slow and energetically inefficient control. Additionally, a large part of the heating output of the resistor disperses into the air adjacent thereto, losing a large part of the desired "radiant" effect and wide circulation of the heating system based on radiators. EP O 161 891 A2 discloses a prior art temperature control system.

The purpose of the present invention is to supply a heating system which provides a simultaneous solution to the aforementioned drawbacks.

## EXPLANATION OF THE INVENTION

For said purpose, the object of the present invention is a new heating system of the type indicated at the beginning, of completely novel concept and function, which in its essentiality described in the appended claim 1.

According to another characteristic of the present invention, the inlet tube and the outlet tube of the heat-carrying fluid are disposed one inside the other, and enclosed in a single "monotubular" sheathing.

The inlet tube and the outlet tube can be disposed one inside the other, and enclosed in a single "monotubular" sheathing, complementary to the outlet and inlet tubes in the boiler shell.

In accordance with another characteristic of the present invention, said exchanger comprises at least an exchange tube for the circulation of the heat-carrying fluid through the interior of said block of paramagnetic material.

According to another characteristic of the heating system of the present invention, it comprises a plurality of exchanger tubes in parallel flow.

In accordance with another characteristic of the invention, the system comprises means of assembling the boiler shell to the radiator shell, for contiguous installation.

Preferably, the paramagnetic material of the exchanger block is aluminium or an aluminium alloy.

In accordance with the preferred embodiment of the system of the invention, the controller comprises

A first PID control, whose entrance is an error signal $ea = |Tc - Ta|$, difference between the consign temperature $(Tc)$ and the ambient temperature $Ta$, and whose outlet is a consign temperature $(Tr)$ of the radiators; and

An APID control, in tandem with the first PID control, whose entrance is the difference between said consign temperature $(Tr)$ of the radiators and the outlet temperature $(Ts)$ of the radiators, and which actuates on the radiators in order to obtain the final control temperature, or ambient temperature $(Ta)$.

In the preferred embodiment, said controller comprises

- a means so that, when the ea error is greater than a pre-set value, the first PID regulator regulates the temperature of the radiator shell or shells so that the same does not exceed a pre-determined maximum temperature, supplying heat as long as 100% of the thermal output thereof does not occur to the radiator shell or shells; and so that, when the pre-determined maximum temperature is reached, it makes the thermal output decrease progressively in order to maintain the radiator shell or shells at this pre-determined maximum temperature until e☐ reaches said pre-set value, and

- a means so that, when the ea error is lesser than said pre-set value, the temperature of the radiator is adjusted to the temperature necessary to achieve the ambient temperature desired.

In a variant, the controller is adapted to be installed in the interior of the boiler shell.

Alternatively, the controller can be designed to be installed remotely from the casing, comprising means of transmission of the control signal to the means of actuation of the pump and of the exchanger.

In this case, the system can remotely administer a plurality of radiator shells, installed at different locations, each one being associated to a respective ambient temperature (Ta), the temperature control means being disposed on at least one centralized remote control and management device.

According to a preferred embodiment, the system comprises at least one power regulation system by means of an insulated gate bipolar transistor (IGBT) for the regulation "by voltage" of the radiation shells.

In this case, the radiation shell is supplied by the transmitting current of the IGBT, whose gate is supplied through the outlet of a driver, in series with the APID outlet, comprising a rectifier, of continuous outflow, one of whose terminals is connected to the IGBT collector, and its other terminal being connected to the outlet of the radiation shell.

Preferably, this regulation system comprises means to control the power supplied to the radiation shell according to a work cycle that goes from 0% to 100% of the power in increments of 1 %.

## BRIEF DESCRIPTION OF THE DRAWINGS

In the attached drawings, the forms of preferred embodiments are illustrated in an exemplary and non-limitative, although non-exclusive, manner, of the heating system by means of radiators object of the invention. In said drawings, two merely in illustrative and non-limitative fashion:

fig. 1   is a perspective view of a first mode of embodiment of a heating system according to the invention, applied to a towel dryer;

fig. 2   is a perspective view, similar to Fig. 1, of a second mode of embodiment of a heating system according to the invention, applied in this case to a conventional radiator-emitter heater;

fig. 3   is a view similar to that of Fig. 2, but wherein the boiler shell and sheathing are shown separated from the emitter or radiator themselves;

fig. 4   is a perspective and detailed view that shows, according to IV of Fig. 3, the "monotubular" joining of the boiler shell to the radiator-emitter;

fig. 5   is a front elevational view of the interior of the boiler shell, illustrating the exchanger, pump, means of regulation and control and ES valves;

fig. 6   is an upper plan view, according to VI of Fig. 5;

fig. 7   is a schematic view of the PID + APID control loop of the heating system of the present invention; and

fig. 8   is a view similar to that of Fig. 7, but enlarged with the diagram representing the regulation system by means of a insulated gate bipolar transistor (IGBT).

## DETAILED DESCRIPTION OF THE DRAWINGS

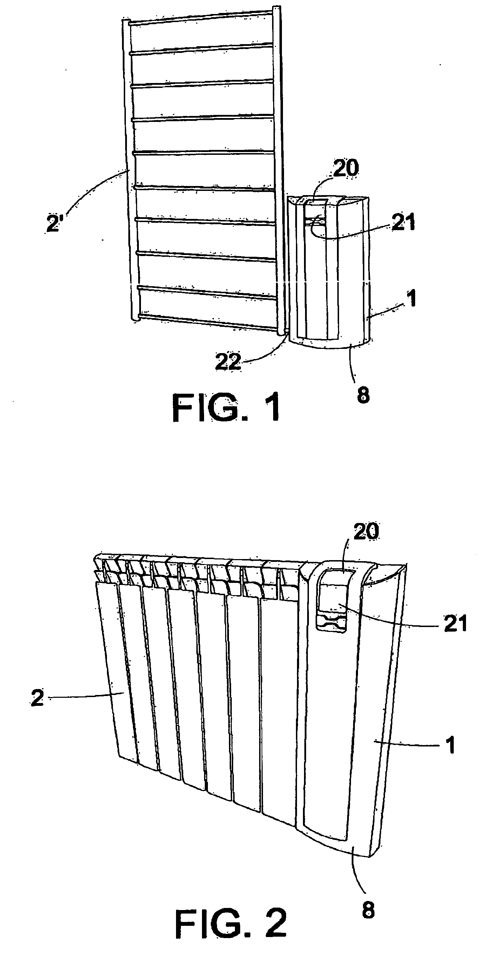

In Figs. 1 and 2 it can be observed that the heating system of the invention is composed of a radiation shell 2, 2' and a shell 7 of a boiler 1 which can be installed contiguously or adjacently to the radiation shell 2 and 2'. This radiation shell can have any configuration and material. In Fig. 1 it is a towel heater 2' for the toilet, and the boiler is adjacent to the heater 2, while in Fig. 2 another example has been represented wherein the radiation shell is constituted by a conventional modules radiator-emitter 2. In this case, the emitter radiator 2 and the boiler shell are completely contiguous and are installed practically without solution of continuity, determining a single heating shell.

The heat-carrying fluid can be water, thermic oil or any other fluid with the suitable specific heat and transmission coefficient and convention. The heat-carrying fluid enters the radiator 2, 2' at an inlet temperature, Te, through an inlet tube 3, and exits the same at an outlet temperature, Ts, through an outlet tube 4, Te, through an inlet tube 3, and exits the same at an outlet temperature, Ts, through an outlet tube 4.

A pump 5 is in charge of driving the heat-carrying fluid, and means of control of the ambient temperature, Ta, are those in charge of administering the boiler, by controlling the temperature and the flow of the heat-carrying fluid.

The first special feature of the system of the present invention is that the boiler 1 has an exchanger system 6 of the electric type heat, but in which, unlike what is conventional, the heat-carrying fluid is does not make contact with the electrical resistance elements responsible for the heating. The exchanger is comprised of at least one block 9 of a paramagnetic material wherein circulates the heat-carrying fluid and which comprises the electrical resistors 10 which act as a heat source. The absence of contact is beneficial for the maintenance and extension of the operational life of both the resistor and the heat-carrying fluid, due to the fact that is limits the effect of corrosion a great deal, given that the water, for example, is heated through the conduction of the heat though the block 9.

This material of the block 9 can be aluminium, an aluminium alloy, or other materials which include aluminium or its alloys in sufficient quantity and proportion.

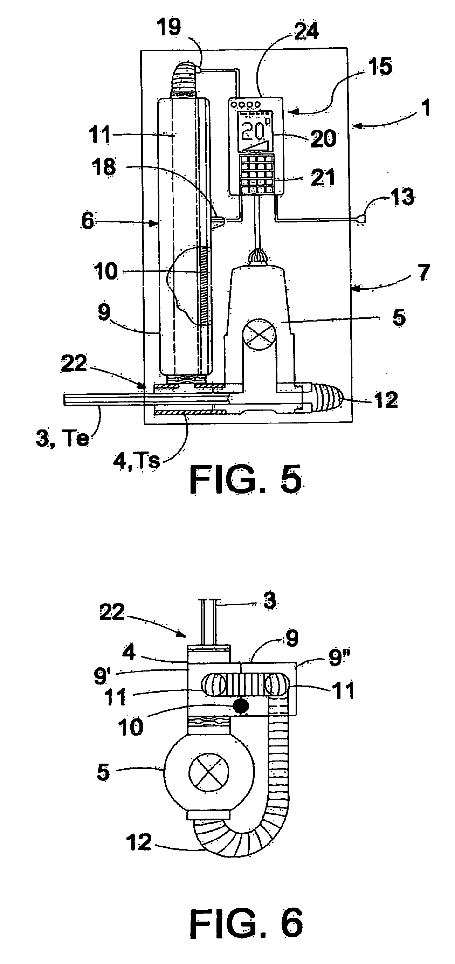

In Figs. 5 and 6 an example of embodiment is shown wherein the block 9 is formed by two middle pieces 9', 9" (Fig. 6) which when joined both embrace and retain the resistor 10. A water tube 11 ascends the interior of the block 9, and again descends through the interior thereof after making an upper loop, in mutually parallel paths therebetween and with respect to the resistor 10 which, in this case, is a rod type resistor. After exiting through the lower part of the block 9 of the exchanger 6, a lower tube 12 conducts the water, or other thermic fluid, towards the inlet of the pump 5, wherefrom its exits towards the outlet of the boiler 1 or inlet 3 to the radiator 2.

In other forms of embodiment of the exchanger 6, which is not illustrated, it can comprise a single tube 1 or more than two tubes 1, and more than one resistor 10 through the interior of the block 9 of aluminium or similar material or such like.

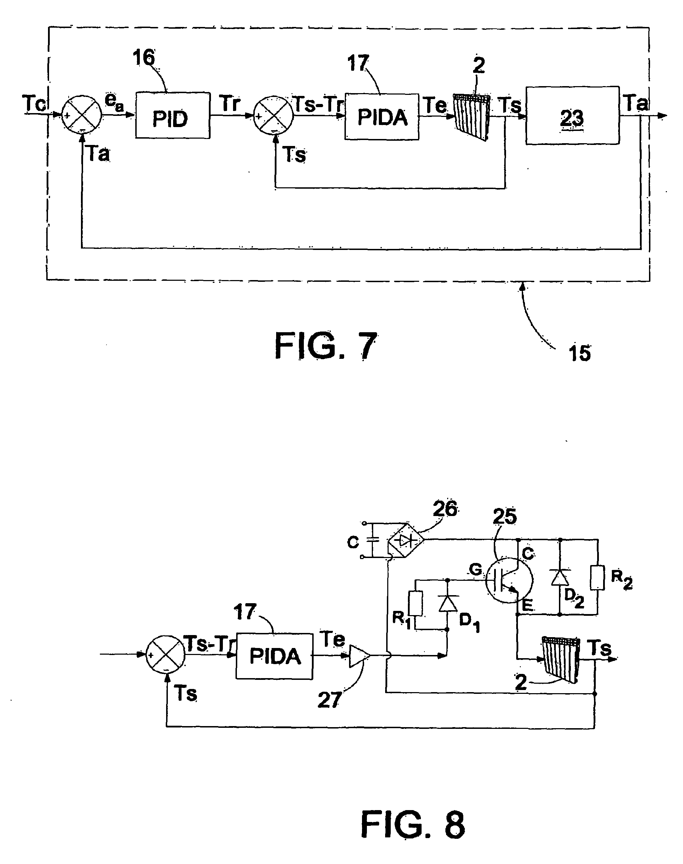

Another innovative aspect of the present invention is that the means of control of the ambient temperature Ta of a compartment 23 (Fig. 7) comprise a ambient temperature sensor or probe 13, at least one sensor of the heat-carrying fluid temperature 18, one safety temperature sensor 19, and one PID-APID controller 15. This is made up of a first Proportional Integral Derivative (PID) controller 16 which actuates on the radiator output, and an Adaptive Proportional Integral Derivative (APID) 17. The controller 15 actuates with the ambient temperature, Ta, as a control parameter and with action on the flow of the heat-carrying fluid, providing a consign temperature Tr of the radiator (to compare with the outlet temperature, Ts, thereof) in order to obtain the inlet temperature, Te, to the radiator through the thermal output contributed by the electrical resistor 10. Later on its function with regard to Fig. 7 will be explained.

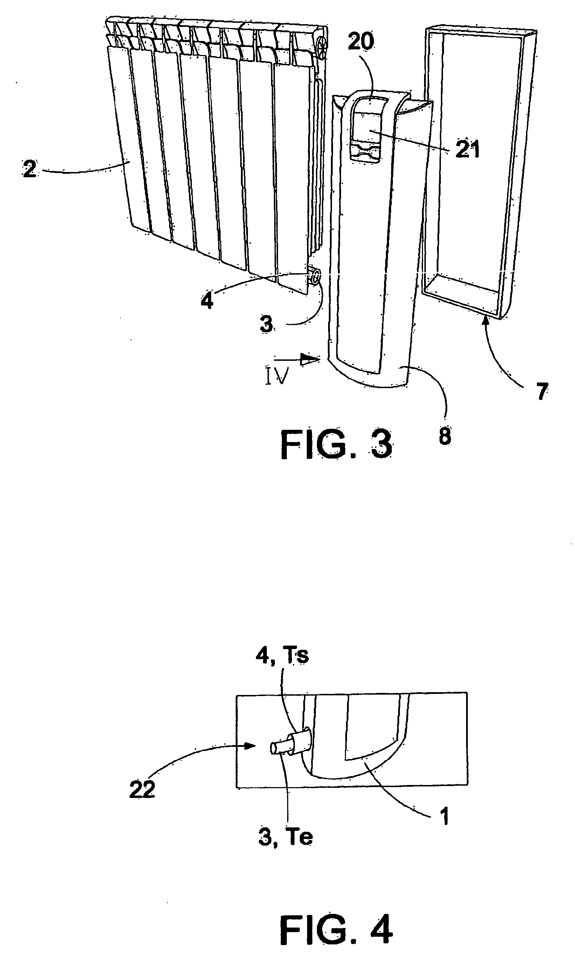

The heat exchanger 6 and the pump 5 are disposed in the interior of a casing, or boiler shell 7 (see Figs. 3 and 5), provided with a coupling complementary 22 to the inlet tubes 3 and outlet tubes 4 or the radiator shell 2, 2'.

In Figs. 4 through 6 it can be observed that the inlet tube 3 and the outlet tube 4 of the heat-carrying fluid (with respect to the radiator 2, 2') are disposed one inside the other, and enclosed in a single "monotubular" sheathing 22. Specifically, the inlet tube 3 is concentric, co-axial and inside the outlet tube 4.

The water or heat-carrying fluid exits the boiler 1 hot and enters the radiator 2, 2' through the tube 3, at a temperature TE, and exits the radiator 2, 2', at a temperature Ts, lower than Te, through the tube 4, in order to enter the boiler 1.

Thus, this connection 22 is "universal", as it is directly applicable to conventional "monotube" connections or, if this is not the case, without doing anything more than making simple corrections and reconnections of the inlet and outlet in the case of "dual tube" radiators and emitters, in order to leave them with a single inlet-outlet.

In the drawings, an embodiment has been illustrated wherein the controller 15 is likewise situated in the interior of the casing 7 of the boiler shell 1. In this case, the electronic and logic of the controller, which can have a microchip, for example, is inside a frame 24 which also incorporates a display 20 and a keyboard 21, and/or other inlet/outlet interfaces, accessible from the exterior, as can be observed in Figs. 1 to 3 and 5. The display 20 and the keyboard are visible through the cover 8 of the sheathing 7 or casing of the boiler shell 1, whose clearance permits access to the interior of the boiler shell 1.

In addition to connections with the sensors 13, 18 and 19, the controller 15 has a connection 14 with the pump 5, for the acquisition of information and the transmission of command signals.

In a no less interesting alternative, the controller 15 is adapted to be installed remotely from the casing 7 and, therefore, from the boiler 1 and the radiator 2, 2' itself. In this case, means of transmission communicate the control signals to and from the temperature sensors, the boiler 1, the pump 5 and the controller or remote controllers.

In this way, a plurality of radiator shells 2, 2' can be controlled in a centralized and remote manner, for example, those of a dwelling, office, building, etc. with respective ambient temperatures, and the means of control 15 of the temperature being disposed on at least one centralized, remote control and management device. This system can form part of a broader home system and can even be controlled by means of instructions transmitted through the Internet.

As has been mentioned previously, the regulation of the electronics of the new system is based on a double PID regulation. This means that it has the two regulators linked together, as shown in the diagram of Fig. 7. This make up will permit the system to be able to control the temperature Ta of a compartment with the determining factor of maximizing the efficiency and minimizing the energy consumption.

The difference between the consign temperature Tc and the ambient temperature Ta measured is called ambient error e□ Therefore,

$$e_a = \mid Tc - Ta \mid$$

This allows for a double operation. On the one hand, the operation of mode with an ambient error $e_a$ greater than a pre-determined temperature, for example 2 degrees and on the other hand when this error $e_a$ is lesser.

**Mode 1: Ambient error ($e_a$) greater than 2 degrees:**

In this mode of work, the aim is to heat the radiator 2, 2' as much as possible so that it arrives at the desired temperature Tc as quickly as possible. The first PID regulator 16 regulates the temperature of the radiator so that it does not exceed the maximum temperature allowed in this type of equipment (70 degrees centigrade). In this aspect of operation, the power supplied to the radiator shall be 100% until the temperature of the radiator arrives at the maximum permitted. When this occurs, the power will progressively decrease thereby saving lots of energy and keeping the radiator at 70°C. It will therefore remain this way until the ambient error is lower than 2 degrees and begins working in the next mode.

**Mode 2: Ambient error (e$_a$) of less than 2 degrees:**

In this mode of work, the aim is to adjust the temperature of the radiator to the temperature necessary to achieve the ambient temperature desired. This temperature shall be different each time since it will depend on the thermic conditions of the equipment. This is achieved with the Adaptive Proportional Integral Derivative (APID) 17 which is implemented on the electronics of the regulator 15. This regulation is in charge of observing the variations in temperature Ta and adjusting the output to possible thermic changes produced in the atmosphere.

The system adapts to the temperature fluctuations caused by disturbances in the environment such as air currents, opening and closing doors, windows, etc. Although it is a slower adjustment, it permits the obtaining of a better efficiency of the radiator and what is more important, a considerable saving of energy. This type of operation permits the connection of two equal radiators consuming the same amount of energy as a single at maximum power consumes.

Lastly, illustrated in Fig. 8 by means of a diagram complementary to Fig. 7 is the power regulation system by means of an insulated gate bipolar transistor (IGBT) 25, which, typically, permits the controlling of high intensities with a very low control output. The power supplied to the radiator 2 is done through an IGBT (Insulated Gate Bipolar Transistor). This power transistor permits a more efficient control through traditional thyristor preventing the electromagnetic interferences produced by the abrupt changes of output current. With the IGBT 25 we can regulate the load by voltage, permitting the control of the power supplied to the load (radiator 2) with a work cycle that goes from 0% to 100% in increments of, preferably, 1%.

Specifically, the radiator 2 is supplied by the current of the emitter $\underline{E}$ of the IGBT 25, whose isolated gate $\underline{G}$ is supplied by the outlet of a ""driver" 27, in series with the outlet of the APID 17. A rectifier 26, of continuous outflow, connects a terminal with the collector $\underline{C}$ of the IGBT 25 and the outlet of the load or radiator 2, whose temperature measurement supplies the error signal of the APID 17.

The parallel assemblies diode D1 - resistor R1, in series with gate $\underline{G}$ and diode D2 - resistor R2, in parallel with collector $\underline{C}$ and emitter $\underline{E}$, permit the suitable corrections to the described system, as can be observed in Fig. 8.

The nature of the present invention having been sufficiently described, as well as the way of putting it into practice, it must be pointed out that everything is subject to changes in detail as long as it does not alter, change or modify its main principle.

**Claims**

1.    Heating system by means of radiators, which comprises:

- at least one heat-carrying fluid heating boiler (1),
- at least one radiator shell (2, 2'), wherein heat-carrying fluid enters at an inlet temperature (Te) through an inlet tube (3), and wherefrom it exits at an outlet temperature (Ts) through an outlet tube (4),
- an impulse pump (5) of the heat-carrying fluid, and
- means of controlling the ambient temperature (Ta) through the control of the temperature and flow of the heat-carrying fluid,

**characterized in that**

- the boiler (1) comprises a heat exchanger (6) made up of at least one block (9) of a paramagnetic material within which circulates the heat-carrying liquid and which comprises electrical resistors (10) which act as heat sources;
- the means of control of the ambient temperature comprise:

- a sensor of the ambient temperature
- at least one sensor of the heat-carrying fluid temperature, and
- one controller (15) by means of <u>a first proportional-integral-derivative (PID) controller (16) which actuates on the radiator output, and one</u> adaptive proportional-integral-derivative (APID) controlle (17), in tandom with the first proportional-integral-derivative (PID) controller (16), whose output variable is the ambient temperature (Ta) and with action on the heat-carrying fluid flow and the inlet temperature thereof (Te) through the thermal output provided by the electrical resistor (10);

and
- the heat exchanger (6) and the pump (5) are disposed inside the casing or boiler shell (7), provided with a coupling complementary to the inlet and outlet tubes of at least one radiator shell (2, 2').

2. Heating system according to claim 1, **characterized in that** the inlet tube (3) and the outlet tube (4) of the heat-carrying fluid are disposed one inside the other, and enclosed in a single "monotubular" sheathing (22).

3. Heating system according to claim 2, **characterized in that** inlet tube (3) and the outlet tube (4) of the heat-carrying fluid are disposed one inside the other, and enclosed in a single "monotubular" sheathing, complementary to the outlet and inlet tubes in the boiler shell.

4. Heating system according to claim 1, **characterized in that** said exchanger (6) comprises at least one exchange tube (11) for the circulation of the heat-carrying fluid through the interior of said block (9) of paramagnetic material.

5. Heating system according to claim 4, **characterized in that** it comprises a plurality of parallel flow exchanger tubes.

6. Heating system according to claim 1, **characterized in that** it comprises means of assembling the boiler shell to the radiator shell, for the contiguous installation thereof.

7. Heating system according to claim 1, **characterized in that** the paramagnetic material of the block (9) of the exchanger (6) is aluminium or an aluminium alloy.

8. Heating system according to claim 1, **characterized in that** said controller (15) comprises

   - said PID control (16), whose entrance is an error signal ea = Tc - Ta, difference between the consign temperature (Tc) and the ambient temperature Ta, and whose outlet is a consign temperature (Tr) of the radiators (2, 2'); and
   - said APID control (17), in tandem with the first PID control (16), whose entrance is the difference between said consign temperature (Tr) of the radiators (2, 2') and the outlet temperature (Ts) of the radiators, and which actuates on the radiators (2, 2') in order to obtain the final control temperature, or ambient temperature (Ta).

9. Heating system according to claim 8, **characterized in that** said controller (15) comprises means so that, when the ea error is greater than a pre-set value, the first PID regulator (16) regulates the temperature of the radiator shell or shells (2, 2') so that the same does not exceed a pre-determined maximum temperature, supplying heat as long as 100% of the thermal output thereof does not occur to the radiator shell or shells (2, 2'); and so that, when the pre-determined maximum temperature is reached, it makes the thermal output decrease progressively in order to maintain the radiator shell or shells (2, 2') at this pre-determined maximum temperature until $e_a$ reaches said pre-set value.

10. Heating system according to claim 9, **characterized in that** said controller (15) comprises means so that, when the ea error is lesser than said pre-set value, the temperature of the radiator is adjusted to the temperature necessary to achieve the ambient temperature desired.

11. Heating system according to any of claims 1, 8, 9 or 10, **characterized in that** the controller (15) is adapted to be installed in the interior of the boiler shell (7).

12. Heating system according to any of claims 1, 8, 9 or 10, **characterized in that** the controller (15) is adapted to be installed remotely from the casing (7), comprising means of transmission of the control signal to the means of actuation of the pump (5) and of the exchanger (6).

13. Heating system according to claim 12, **characterized in that** it comprises a plurality of radiator shells (2, 2'), adapted to be installed at different locations, and each one being associated to a respective ambient temperature (Ta), the temperature control means (15) being disposed on at least one centralized remote control and management device.

14. Heating system according to any of the previous claims, **characterized in that** it comprises at least one power regulation system by means of an insulated gate bipolar transistor IGBT (25) for the regulation "by voltage" of the radiation shells (2, 2').

15. Heating system according to claim 14, **characterized in that** the radiation shell (2, 2') is supplied by the emitting current (E) of the IGBT (25), whose gate (G) is supplied through the outlet of a "driver" (27), in series with the APID outlet (17), comprising a rectifier (26), of continuous outflow, one of whose terminals is connected to the IGBT (25) collector (C), and its other terminal being connected to the outlet of the radiation shell (2, 2').

16. Heating system according to claims 14 or 15, **characterized in that** said regulation system comprises means to control the power supplied to the radiation shell (2, 2') according to a work cycle that goes from 0% to 100% of the power in increments of 1%.

**Patentansprüche**

1. Heizsystem mittels Radiatoren, umfassend:

   - wenigstens einen Heizkessel zum Heizen eines wärmeträgenden Fluidums (1),
   - wenigstens eine Radiatorschale (2, 2'), in welche das wärmeträgende Fluidum durch ein Eintrittsrohr (3) bei einer Eintrittstemperatur (Te) eintritt, und aus der es durch ein Austrittsrohr (4) bei einer Austrittstemperatur (Ts) austritt,
   - eine Impulspumpe (5) für das wärmeträgende Fluidum, und
   - ein Mittel zum Steuern der Raumtemperatur (Ta) durch Steuern der Temperatur und der Flussmenge des wärmeträgenden Fluidums,

   **dadurch gekennzeichnet, dass**

   - der Heizkessel (1) einen Wärmeaustauscher (6) umfasst, der aus wenigstens einem Block (9) aus einem paramagnetischen Material besteht, in dem die wärmeträgende Flüssigkeit fliesst und der elektrische Widerstände (10) umfasst, die als Wärmequellen wirken;
   - das Mittel zum Steuern der Raumtemperatur Folgendes umfasst:

     - einen Raumtemperatursensor,
     - wenigstens einen Temperatursensor für das wärmeträgende Fluidum, und
     - einen Kontroller (15) mittels einer ersten Proportional-Integral-Derivativ (PID)-Steuerung (16), die auf den Austritt des radiators wirkt, und einer adaptiven Proportional-Integral-Derivativ (APID)-Steuerung (17), in Tandem mit der ersten Proportional-Integral-Derivativ (PID)-Steuerung (16), deren varierbarer Austritt die Raumtemperatur (Ta) ist und die durch den von dem elektrischen Widerstand (10) gelieferten Wärmeaustritt auf die Flussmenge des wärmeträgenden Fluidums und dessen Eintrittstemperatur (Te) wirkt;

   und
   - der Wärmeaustauscher (6) und die Pumpe (5) innerhalb des Heizkesselgehäuses oder der Heizkesselschale (7) angeordnet sind, und mit einer zu den Eintritts- oder Austrittsrohren von wenigstens einer Radiatorschale (2, 2') ergänzenden Kopplung versehen sind.

2. Heizsystem nach Anspruch 1, **dadurch gekennzeichnet, dass** das Eintrittsrohr (3) und das Austrittsrohr (4) für das wärmeträgende Fluidum in einander angeordnet sind, und in einer einzigen "einröhrigen" Umhüllung (22) eingeschlossen sind.

3. Heizsystem nach Anspruch 2, **dadurch gekennzeichnet, dass** das Eintrittsrohr (3) und das Austrittsrohr (4) für das wärmeträgende Fluidum in einander angeordnet sind, und in einer einzigen, zu den Eintrittes- und Austrittsrohren ergänzenden, "einröhrigen" Umhüllung in der Heizkesselschale eingeschlossen sind.

4. Heizsystem nach Anspruch 1, dadurch gekennzeichnet, dass der besagte Wärmeaustauscher (6) wenigstens ein Austauschrohr (11) für den Umlauf des wärmeträgenden Fluidums im Innerm des besagten Blockes (9) aus paramagnetischen Materials umfasst.

5. Heizsystem nach Anspruch 4, **dadurch gekennzeichnet, dass** es eine Vielzahl von parallellen Umlauf-Austauschrohren umfasst.

6. Heizsystem nach Anspruch 1, **dadurch gekennzeichnet, dass** es ein Mittel zum Zusammenfürgen der Heizkesselschale mit der Radiatorschale umfasst, zwecks deren Aufstellung nebeneinander.

7. Heizsystem nach Anspruch 1, **dadurch gekennzeichnet, dass** das paramagnetische Material des Blocks (9) des Austauschers (6) Aluminium oder eine Aluminiumlegierung ist.

8. Heizsystem nach Anspruch 1, **dadurch gekennzeichnet, dass** der besagte Kontroller (15) Folgendes umfasst:

   - die besagte PID-Steuerung (16), deren Eingang ein Fehlersignal ea = Tc - Ta, Unterschied zwischen der Soll-Temperatur (Tc) und der Raumtemperatur Ta, ist, und deren Ausgang eine Soll-Temperatur (Tr) der Radiatoren (2, 2') ist; und
   - die besagte APID-Steuerung (17), in Tandem mit der ersten PID-Steuerung (16), deren Eingang der Unterschied zwischen der besagten Soll-Temperatur (Tr) der Radiatoren (2, 2') und der Ausgangstemperatur (Ts) der Radiatoren ist, und die auf den Radiatoren (2, 2') wirkt, um die Endsteuertemperatur, oder Raumtemperatur (Ta) zu erhalten.

9. Heizsystem nach Anspruch 1, **dadurch gekennzeichnet, dass** der besagte Kontroller (15) ein Mittel umfasst., so dass, wenn der Fehler ea größer ist als ein voreingestellter Wert, der erste PID-Regulator (16) die Temperatur der Radiatorschale bzw. -Schalen (2, 2') so reguliert, dass sie eine vorbestimmte Höchsttemperatur nicht überschreitet, indem Wärme solange geliefert wird wie 100% des Wärmeaustritts zu der bzw. den Radiatorschalen (2, 2') nicht erreicht ist, und so dass, wenn die vorbestimmte Höchsttemperatur erreicht wird, es den Wärmeaustritt allmählich abnehmen lässt, um die Radiatorschale bzw. -Schalen (2, 2') auf diese vorbestimmte Höchsttemperatur zu halten, bis ea den besagten voreingestellten Wert erreicht.

**10.** Heizsystem nach Anspruch 9, dadurch gekennzeichnet, dass der besagte Kontroller (15) ein Mittel umfasst, so dass, wenn der Fehler ea kleiner ist als der besagte voreingestellte Wert, die Temperatur des Radiators desjenigen Temperatur angepasst ist, die notwendig ist, um die gewünsche Raumtemperatur zu erhalten.

**11.** Heizsystem nach irgendeinem der Ansprüche 1, 8, 9 oder 10, **dadurch gekennzeichnet, dass** der Kontroller (15) angepasst ist, um innerhalb der Heizkesselschale (7) aufgestellt zu werden.

**12.** Heizsystem nach irgendeinem der Ansprüche 1, 8, 9 oder 10, **dadurch gekennzeichnet, dass** der Kontroller (15) angepasst ist, um entfern vom Gehäuse (7) aufgestellt zu werden, das ein Mittel umfasst, um das Bedienungssignal dem Mittel zum Betätigen der Pumpe (5) und des Austauschers (6) zu übertragen.

**13.** Heizsystem nach Anspruch 12, **dadurch gekennzeichnet, dass** es eine Vielzahl von Radiatorschalen (2, 2') umfasst., die angepasst sind, um am unterschiedlichen Stellen aufgestellt zu werden, und wobei jede davon einer jeweiligen Raumtemperatur (Ta) zugeordnet ist, wobei das Temperatursteuermittel (15) auf wenigstens einer zentralen Fernbedienung- und Verwaltungsvorrichtung aufgestellt ist.

**14.** Heizsystem nach einem der vorgehenden Ansprüche, **dadurch gekennzeichnet, dass** es wenigstens ein Energieregulierungssystem mittels eines Isolierschicht-Bipolartransistors IGBT (25) für die Regulierung "durch Spannung" der Radiatorschalen (2, 2') umfasst.

**15.** Heizsystem nach Anspruch 14, **dadurch gekennzeichnet, dass** die Radiatorschale (2, 2') mit dem Emissionsstrom (E) des IGBTs (25) versorgt wird, dessen Tor (G) durch den Ausgang eines "Drivers" (27), der mit dem APID-Ausgang (17) reihengeschaltet ist, versorgt wird, und einen Gleichrichter mit Gleichstrom-Ausgang (26) umfasst, dessen eine Anschlussklemme mit dem Kollektor (C) des IGBTs (25) und dessen andere Anschlussklemme mit dem Ausgang der Radiatorschale (2, 2') verbunden ist.

**16.** Heizsystem nach Ansprüchen 14 oder 15, **dadurch gekennzeichnet, dass** das besagte Regulierungssystem ein Mittel umfasst, um die der Radiatorschale (2, 2') zugeführte Energie gemäss einem Arbeitszyklus, der mit 1%-igen Inkrementen von 0% bis 100% der Energie reicht, zu steuern.

## Revendications

**1.** Système de chauffage au moyen de radiateurs, qui comprend:

- au moins une chaudière de chauffage de fluide caloporteur (1),
- au moins une coquine de radiateur (2, 2'), où le fluide caloporteur entre à une température d'entrée (Te) à travers un tube d'entrée (3), et d'où il sort à une température de sortie (Ts) à travers un tube de sortie (4),
- une pompe à impulsion (5) du fluide caloporteur, et
- un moyen pour contrôler la température ambiante (Ta) à travers la commande de la température et du débit du fluide caloporteur,

**caractérisé par le fait que**

- la chaudière (1) comprend un échangeur de chaleur (6) constitué d'au moins un bloc (9) d'un matériau paramagnétique dans lequel circule le liquide caloporteur et qui comprend des résistances électriques (10) qui agissent comme sources de chaleur;
- le moyen de contrôle de la température ambiante comprend:

 - un capteur de la température ambiante,
 - au moins un capteur de la température du fluide caloporteur, et
 - un contrôleur (15) au moyen d'une première commande proportionnel-intégral-dérivatif (PID) (16) qui agit sur sortie du radiateur, et d'une commande proportionnel-intégral-dérivatif adaptative (APIS) (17), en tandem avec la première commande proportionnel-intégral-dérivatif (PID) (16), dont la sortie variable est la température ambiante (Ta) et qui agit sur le débit de fluide caloporteur et sa température d'entrée (Te) par la sortie thermique fournie par la résistance électrique (10);

 et
- l'échangeur de chaleur (6) et la pompe (5) sont disposés à l'intérieur du boîtier ou coquille de chaudière (7), pourvus d'un couplage complémentaire aux tubes d'entrée ou de sortie d'au moins une coquille de radiateur (2, 2').

**2.** Système de chauffage selon la revendication 1, **ca-**

ractérisé par le fait que le tube d'entrée (3) et le tube de sortie (4) du fluide caloporteur sont disposés l'un dans l'autre, et refermés dans une seule enveloppé "mono-tubulaire" (22).

3. Système de chauffage selon la revendication 2, **caractérisé par le fait que** le tube d'entrée (3) et le tube de sortie (4) du fluide caloporteur sont disposés l'un dans l'autre, et renfermés dans une seule enveloppé "mono-tubulaire", complémentaire aux tubes de sortie et d'entrée dans la coquille de chaudière.

4. Système de chauffage selon la revendication 1, **caractérise par le fait que** ledit échangeur (6) comprend au moins un tube échangeur (11) pour la circulation du fluide caloporteur à l'intérieur dudit bloc (9) du matériau paramagnétique.

5. Système de chauffage selon la revendication 4, **caractérisé par le fait qu'**il comprend une pluralité de tubes échangeurs de circulation parallèles.

6. Système de chauffage selon la revendication 1, **caractérisé par le fait qu'**il comprend un moyen pour assembler la coquille de chaudière avec la coquille de radiateur en vue de leur installation contiguë.

7. Système de chauffage selon la revendication 1, **caractérisé par le fait que** le matériau paramagnétique du bloc (9) de l'échangeur (6) est de l'aluminium ou un alliage d'aluminium.

8. Système de chauffage selon la revendication 1, **caractérisé par le fait que** ledit contrôleur (15) comprend

- ladite commande PID (16), dont l'entrée est un signal d'erreur ea = Tc - Ta, différence entre la température de consigne (Te) et la température ambiante Ta, et dont la sortie est une température de consigne (Tr) des radiateurs (2,2'); et
- ladite commande APID (17), en tandem avec la première commande PID (16), dont l'entrée est la différence entre ladite température de consigne (Tr) des radiateurs (2, 2') et la température de sortie (Ts) des radiateurs, et qui agit sur les radiateurs (2, 2') pour obtenir la température de commande finale, ou température ambiante (Ta).

9. Système de chauffage selon la revendication 1, **caractérisé par le fait que** ledit contrôleur (15) comprend un moyen de sorte que, lorsque l'erreur ea est supérieure à une valeur préréglée, le premier régulateur PID (16) régule la température de la coquille ou des coquilles de radiateur (2, 2') de sorte que celle-ci n'excède pas une température maximale prédéterminée, en fournissant de la chaleur tant qu'il ne se produise pas 100% de la sortie thermique vers la coquille ou les coquilles de radiateur (2, 2'), et de sorte que, lorsque la température maximale prédéterminés est atteinte, il fasse diminuer progressivement la sortie thermique pour maintenir la coquille ou les coquilles de radiateur (2, 2') à cette température maximale prédéterminée, jusqu'à ce que ea atteigne ladite valeur préréglée.

10. Système de chauffage selon la revendication 9, **caractérisé par le fait que** ledit contrôleur (15) comprend un moyen de sorte que, lorsque l'erreur ea est inférieure à ladite valeur préréglée, la température du radiateur soit ajustée à la température nécessaire pour obtenir la température ambiante désirée.

11. Système de chauffage selon l'une quelconque des revendications 1, 8, 9 ou 10, **caractérisé par le fait que** le contrôleur (15) est adapté pour être installe à l'intérieur de la coquille de chaudière (7).

12. Système de chauffage selon l'une quelconque des revendications 1, 8, 9 ou 10, **caractérisé par le fait que** le contrôleur (15) est adapté pour être installe éloigné du boitier (7), comprenant un moyen de transmission du signal de commande vers le moyen d'actionnement de la pompe (5) et de l'échangeur (6).

13. Système de chauffage selon la revendication 12, **caractérisé par le fait qu'**il comprend une pluralité de coquilles de radiateur (2, 2'), adaptées pour être installées à différents endroits, et chacune étant associée à une température ambiante respective (Ta), le moyen de commande de température (15) étant disposé sur au moins un dispositif de commande à distance et de gestion centralisé.

14. Système de chauffage selon l'une des revendications précédentes, **caractérisé par le fait qu'**il comprend au moins un système de régulation d'énergie au moyen d'un transistor bipolaire à grille isolée IGBT (25) pour la régulation "par tension" des coquilles de radiateur (2, 2').

15. Système de chauffage selon la revendication 14, **caractérisé par le fait que** la coquille de radiateur (2, 2') est alimentée par le courant d'émission (E) de l'IGBT (25) dont la grille (G) est alimentée à travers la sortie d'un "drive" (27), en série avec la sortie APID (17), comprenant un redresseur (26) à sortie continue dont une borne est connectée au collecteur (C) de l'IGBT (25) et son autre borne est connectée à la sortie de la coquille de radiateur (2, 2').

16. Système de chauffage selon les revendications 14 ou 15, **caractérisé par le fait que** ledit système de régulation comprend un moyen pour commander l'énergie alimentée vers la coquille de radiateur (2, 2') selon un cycle de fonctionnement qui va de 0% à 100% de l'énergie par incréments de 1%.

**FIG. 1**

**FIG. 2**

2

20

21

4

3

7

IV

FIG. 3    8

4, Ts

22

3, Te

1

FIG. 4

FIG. 5

FIG. 6

# FIG. 7

# FIG. 8

**EP 2 048 565 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 730976 A
- GB 2174798 A
- GB 2270370 A

- GB 2298265 A
- FR 2832212
- EP O161891 A2